# EUROPEAN PATENT APPLICATION

(11) **EP 4 068 870 A1**
(43) Date of publication of application: **05.10.2022**
(21) Application number: 22165442.9
(22) Date of filing: 30.03.2022
(51) Int. Cl.: H04W 56/00

(54) **SYSTEMS AND METHOD OF TIME-SYNCHRONISATION OF A WIRELESS SYSTEM**

(30) Priority: 31.03.2021 IN 202141015429
(71) Applicant: Radisys India Private Limited, Bangalore, Karnataka 560103 (IN)
(72) Inventor: CHARIPADI, Gopikrishna, 560070 Karnataka (IN)
(74) Representative: Potter Clarkson

(57) **Abstract**

Traditionally in RU or RRH (Remote Radio Head) designs either frequencysynchronization or time-synchronization is present in the measuring wireless equipment. In such radios it is not possible to directly time-synchronize the measuring instruments to decode the constellation and downlink data channels of RU/RRH due to lack of timing synchronization signal. There are no system and method to directly time-synchronize the measuring instruments to decode the constellation and downlink data channels of RU/RRH due to lack of timing synchronization signal. The disclosure proposes system and method for deriving a timing synchronization signal for e.g., a 10Mhz external frequency output provided by the RU and thereby time-synchronizing the measuring equipment to the RF signal transmitted by the RU, thus opening up a spectrum of various possibilities to use the equipment to monitor and diagnosis of an indoor-cellular system in deployment.

## Description

### FIELD OF INVENTION

The present disclosure relates to the field of wireless measuring instruments for both time synchronization and frequency synchronization in a distributed wireless communication system. In particular, this disclosure pertains to systems and methods for time-synchronizing of a wireless system from existing reference signal.

### BACKGROUND OF THE INVENTION

The following description of related art is intended to provide background information pertaining to the field of the disclosure. This section may include certain aspects of the art that may be related to various features of the present disclosure. However, it should be appreciated that this section be used only to enhance the understanding of the reader with respect to the present disclosure, and not as admissions of prior art.

Communication demands, and particularly wireless communication demands, continue to increase. Next generation wireless communication systems, commonly referred to as "5G communication systems" are being developed, to meet these demands. One important technology to be adopted by 5G communication systems involves the use of base stations which have a large number of input and outputs (sometimes referred to as a massive MIMO system) to serve a large number of communication users. Massive MIMO uses a large excess of antennas and time division duplex operation to serve multiple active user terminals at the same time. Extra antennas focus energy into ever-smaller regions of space to bring huge improvements in throughput and radiated energy efficiency. Such massive MIMO systems may have hundreds of transmit (Tx) and receive (Rx) channels and corresponding RF antennas.

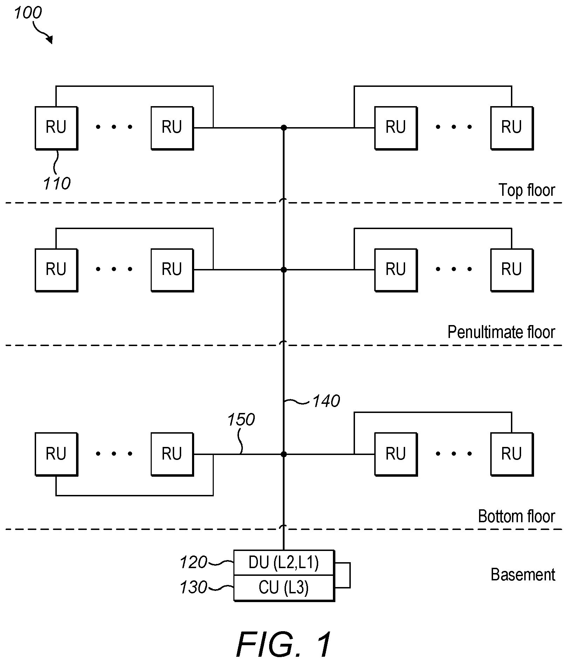

In general communication systems and devices, like other electronics, require testing and, in some cases, calibration with measurement instruments. However, testing and calibration can present challenges in the case of emerging 5G/small cell such as a multi-user massive MIMO communication system or terminal which includes a large number of inputs and outputs. For example, the system performance evaluation depends on the wireless channel characteristics which can be different for different users and different inputs and outputs at the same time. So proper solutions for testing and calibration are needed. Traditionally in wireless systems, it is mandatory to have a timing synchronization trigger for e.g., 1 PPS (Pulse-Per-Second), as trigger to a measuring instrument so that it can be synchronized to the wireless system, which is necessary to decode from the RF wireless input a steady Downlink constellation for the purposes of decoding data and diagnosing in a distributed DU-RU small-cell indoor system as illustrated in FIG. 1 during deployment phase or maintenance phase.

In the state-of-the art, a standard RU hardware in an indoor distributed system will require an additional exclusive 1PPS (1 Pulse-Per-Second) trigger output connector at the RU using which the measurement equipment needs to be explicitly synchronize the time to the received cellular wireless signals in order to decode the constellation and Downlink data channels of RU.

This timing synchronization output trigger is usually provided in the form of a 1PPS external signal derived within the wireless system hardware. Normally, a 10Mhz reference output frequency also derived within the wireless system hardware is provided in order to synchronize the frequency of measuring instrument as well. Using these for frequency-synchronization and time-synchronization respectively any measuring instrument can provide a continuous display of higher-order modulation constellation, decoded data-and-control channels and many more parameters necessary to monitor and troubleshoot in a distributed small-cell indoor system as in FIG. 1. A 5G DU (Digital Unit) and RU (Radio Unit) system for indoor-deployment is illustrated in the FIG. 1, wherein each of the RU hardware are distributed around the indoor-office premises and will need to provide an external 10Mhz reference clock output as well as a 1PPS timingtrigger output for frequency-synchronization and time-synchronization respectively of a measuring wireless equipment (e.g., handheld analyzer) to the wireless system hardware (DU and RU in this case).

Traditionally in RU or RRH (Remote Radio Head) designs either frequency-synchronization or time-synchronization is present in the measuring wireless equipment. Some examples, are other available vendor products such as eDRU and Radios (RRH) in which 10Mhz external out is only provided. Hence in such radios it is not possible to directly time-synchronize the measuring instruments to decode the constellation and downlink data channels of RU/RRH due to lack of timing synchronization signal. Hence, there are no system and method to directly time-synchronize the measuring instruments to decode the constellation and downlink data channels of RU/RRH due to lack of timing synchronization signal.

The measuring instrument could be such as, a benchtop Keysight 4G/5G Analyzer or a Hand-held Analyzer. In fact, different analyzer types have to be synchronized differently using the same 10Mhz reference signal from the RU hardware and hence a generic approach is needed against all types of measuring instrument. The same method can be extended for all equipment such as Keysight 4G/5G signal generators or any other future technology measuring instruments like 6G measuring instruments.

In customary designs, a 10Mhz reference signal in RU are not provided since it is not useful in a commercial RU without a timing reference which is key for synchronization. Besides manufacturing Bill-on-Materials of the RU unit will increase when additional external interface for timing reference is provided.

There is, therefore, a need in the art to devise a system and a method to mitigate the issues present in the prior art.

### OBJECTS OF THE PRESENT DISCLOSURE

Some of the objects of the present disclosure, which at least one embodiment herein satisfies are as listed herein below.

It is an object of the present disclosure to provide a system and a method that enables working as a differentiator.

It is an object of the present disclosure to provide a system/solution for deeper level field diagnostics at bit-rate/ baseband level of the received RF signal from a specific RUs in a distributed wireless deployment system where there are no local timing trigger sources locally accessible at the RUs in the building.

It is an object of the present disclosure to provide for a system that helps to sniff out the faulty front-haul line connection between a digital unit and the specific RU in a distributed wireless network(faulty => (a) when traffic on the connection uses greater than 90% of switch line rate specification - normally commercial switches could begin to drop packets, (b) physical optical cable fractures or (c) logical channels mapping issue between DU and specific RU IDs etc.) between any specific RP and the DU.

It is an object of the present disclosure to provide a system to transmit test signals from frequency-synchronized and time-synchronized Signal Generators in order to sniff out the RU(s) and/or links between RP(s) and the DU systems that are misbehaving.

It is an object of the present disclosure to provide a system and method for deriving a timing synchronization signal for e.g., a 10Mhz external frequency output provided by the RU and thereby time-synchronizing the measuring equipment to the RF signal transmitted by the RU, thus opening up a spectrum of various possibilities to use the equipment to monitor and diagnosis of an indoor-cellular system in deployment.

### SUMMARY

This section is provided to introduce certain objects and aspects of the present invention in a simplified form that are further described below in the detailed description. This summary is not intended to identify the key features or the scope of the claimed subject matter.

In order to achieve the aforementioned objectives, the present invention provides a system and method for deriving a timing synchronization signal. In an aspect, the system may include one or more radio units coupled to at least one control unit associated with one or more user equipment (UE), wherein the one or more UEs are under a coverage area of the one or more radio units. The system may further include a reference clock with a predefined frequency. The reference clock may periodically trigger a measuring unit every predefined interval of time. The measuring unit may be coupled to the control unit, the control unit may be further coupled to one or more processors coupled with a memory. The memory may store instructions which when executed by the one or more processors causes the system to: receive a timing synchronization frame comprising a timestamp derived from the UE; receive a set of data packets from the UE, wherein the set of data packets comprise data channels, control channels and signals; decode the timestamp and synchronize timing with an internal clock of the RU; lock into a wireless radio frequency wireless signal transmitted to the UE based on the decoded timestamp; and decode the set of data packets to diagnose and troubleshoot one or more system level issues during cellular network deployment and maintenance.

In another aspect, the present disclosure includes method for system for deriving of time synchronizing signal. The method may be executed by a processor, and includes the steps of: receiving a timing synchronization frame comprising a timestamp derived from a user equipment (UE), said UE associated with at least one control unit under a coverage area of one or more radio units coupled to the at least one control unit, wherein a reference clock with a predefined frequency periodically triggers a measuring unit coupled to the control unit every predefined interval of time, and receiving a set of data packets from the UE, wherein the set of data packets may include data channels, control channels and signals. Further, the method may include the step of decoding the timestamp and synchronize timing with an internal clock of the RU, and locking into a wireless radio frequency wireless signal transmitted to the UE based on the decoded timestamp. Furthermore, the method may include the step of decoding the set of data packets to diagnose and troubleshoot one or more method level issues during cellular network deployment and maintenance.

### BRIEF DESCRIPTION OF DRAWINGS

The accompanying drawings, which are incorporated herein, and constitute a part of this invention, illustrate exemplary embodiments of the disclosed methods and systems in which like reference numerals refer to the same parts throughout the different drawings. Components in the drawings are not necessarily to scale, emphasis instead being placed upon clearly illustrating the principles of the present invention. Some drawings may indicate the components using block diagrams and may not represent the internal circuitry of each component. It will be appreciated by those skilled in the art that invention of such drawings includes the invention of electrical components, electronic components or circuitry commonly used to implement such components.
FIG. 1 illustrates an example of an Indoor distributed wireless communication system.
FIG. 2 illustrates in accordance with embodiment of the invention time synchronization scheme derived from 10Mhz external frequency clock.
FIG. 3 is one embodiment which indicates the blocks that needs to be programmed inside a model of Keysight Analyzer which is a benchtop standalone measuring equipment.
FIG. 4A is an example of the output before the embodiment for lower-order modulation like Downlink QPSK.
FIG. 4B is another embodiment which indicates the blocks that needs to be programmed inside a model of Keysight Analyzer which is a benchtop modular measuring equipment.
FIG. 5 is an example of the output after the embodiment for lower-order modulation like Downlink QPSK.
FIG. 6 is an example of the output before the embodiment for higher-order modulation like Downlink 256-QAM.
FIG. 7 is an example of the output after the embodiment for higher-order modulation like Downlink 256-QAM.

The foregoing shall be more apparent from the following more detailed description of the invention.

### BRIEF DESCRIPTION OF INVENTION

In the following description, for the purposes of explanation, various specific details are set forth in order to provide a thorough understanding of embodiments of the present disclosure. It will be apparent, however, that embodiments of the present disclosure may be practiced without these specific details. Several features described hereafter can each be used independently of one another or with any combination of other features. An individual feature may not address all of the problems discussed above or might address only some of the problems discussed above. Some of the problems discussed above might not be fully addressed by any of the features described herein.

In one of an exemplary embodiment as provided in FIG. 1, a cellular wireless distributed communication system which includes a Digital Unit (DU) connected to at least one Radio Unit (RU) containing Radio Frequency (RF) hardware, that will also provide an external 10Mhz external reference clock, and these together communicate to a User Equipment (UE) over RF wireless signals. A measuring unit connected with the external 10Mhz reference clock can be programmed to synchronize in timing too to the RU and thereby lock into the wireless radio frequency wireless signal transmitted to the UE and thereby successfully decode the data channels and control channels and signals in order to provide diagnosis in the field for troubleshoot of system level issues during cellular network deployment and maintenance.

One of an embodiment shows a deployment of small-cells solution in an office-block where the DU (Digital Unit) /CU (Control Unit) could be at the basement of the office-block and the RUs which could be mounted off ceilings or pillars in every floor providing localized wireless coverage to UEs within each RU's vicinity. Each of these RU (Radio Units), it is proposed in the invention, to have a 10Mhz reference-out (which is normally not provided in RU designs). This invention will use this 10Mhz reference output to obtain both frequency-synchronization as well as derive time-synchronization, that enables to trigger any measuring equipment like (Handheld) Spectrum Analyzer, for example, so that it will in-turn enable the solution provider to analyse at Baseband level the received RF Shared Data channel and the Signaling, Control channels in the Downlink and check for its IQ constellation, CRC PASS/FAIL, Modulation accuracy analysis etc. One application of this will be to troubleshoot cases where UEs under the vicinity of one RU could be attaching to RUs farther away due to the intended RU not receiving the packets for the UE in some scenarios of highly loaded system (for e.g. in case of peak traffic approaching line-rate of the physical transport switch due to which the switch may drop many packets) or any optical physical cable damage/logical mapping issue in the connection between DU and specific RU(s) (ORAN interface fronthaul connection or any other interface like CPRI interface, for example).

Embodiment of the present invention find particular applicability in a cellular communication system that supports a centralized Digital Unit (DU) connected to Radio units, each unit providing localized coverage to UEs within each RU's coverage area.

The 10Mhz frequency reference clock output connector which is typical in Radio units in such distributed cellular deployments can be used to derive time-synchronization signal which can be used to trigger the measurement equipment. In one embodiment this measurement equipment could be a benchtop Spectrum Analyzer. This timing trigger allows synchronization to the received wireless physical data and enables cellular deployment to troubleshoot via deepdive analysis of the received data and signalling channels as well as cellular communication signals.

Timing synchronizing the measurement equipment to the received cellular wireless data channel enables to troubleshoot higher-order IQ constellation, decode the received data in terms of Cyclic-Redundancy-Check (CRC) failure, perform deeper Modulation analysis to check the various quality aspects of the received data channel.

One application of this is to troubleshoot scenarios where UEs physically closest to an RU coverage area could erroneously communicate to a further neighboring (next closest) RU due to its closest RU not receiving the downlink packets meant for the UE and hence not radiating the packets to it. This scenario could be caused, for example, in cases wherein due to peak traffic approaching Ethernet line-rate of the physical transport Switch to which the closest RU is connected from the DU, resulting in some of the packets meant for that RU getting dropped by the switch and hence not reaching the RU for radiation to its closest UE. Another scenario could be where the optical physical cable has been damaged or corruption of the RU ID logical mapping in software or transport resulting in the packets not getting delivered to the physically closest RU to the UE.

The measuring instrument could be a benchtop Keysight 4G/5G Analyzer or a 4G/5G Modular Analyzer. Those skilled in the art, however, will recognize and appreciate that the specifics of this embodiment are merely illustrative of examples, and all the principles set forth herein are applicable in a variety of measuring instruments. Also, the principles set forth here can be used for all generations of wireless technologies like 3G, 4G,5G, 6G and future technologies.

The FIG. 1 is a diagram illustrating one example of an indoor deployment of Distributed Cellular wireless communication system 100 in which an office-block is depicted wherein the DU [120] and CU [130] connected together is installed at the basement of the office -block and the RUs 110 which is connected using a trunk optical link 150 and a backbone optical network 140. The RUs transmit and receive the Cellular physical channels transported via these optical links from and to the DU/CU combination. Through RF wireless radiation the RUs communicate with the User Equipment's 160 that are in the closest coverage area of the local RUs in its vicinity.

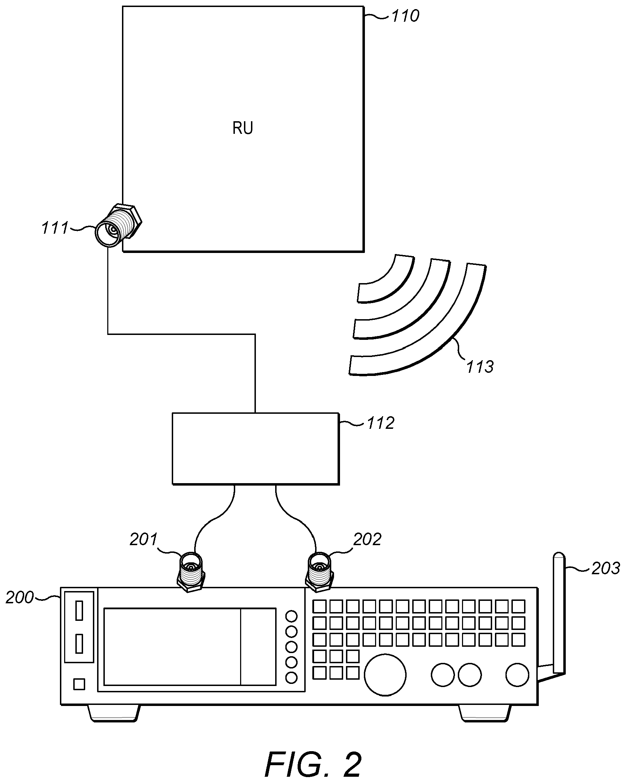

More specifically, the example shown in FIG. 2 shows an embodiment example where the RU 110 provides a 10Mhz reference clock output connector 111. This is normally provided for frequency synchronizing external measurement instruments like a 5G Keysight Benchtop Analyzer 200. This 10Mhz reference clock output is split by a splitter 112 and connected to the analyzer's external frequency reference input clock connector 201. Thus, the Analyzer will run on the same clock frequency as the RU and the two units are frequency synchronized.

In addition, the 10Mhz frequency clock from RU 111 is connected via the splitter 112 to the external trigger connector 202 of the Analyzer. This connector 202 is provided in the Analyzer to time synchronize (phase synchronize) the Analyzer to the RU clock. Normally, measuring equipments like Analyzer will require a low frequency signal like 1 Pulse-Per-Second from the RU in order to time-synchronize to the RU clock. The first aspect of the invention is deriving such low frequency signal internally in the Analyzer from the 10Mhz external clock.

Thus, the measurement Analyzer is frequency synchronized and time-synchronized to the Radio Unit internal clock and hence the measurement equipment is enabled to decode higher-order modulation of the wireless channels and signals.

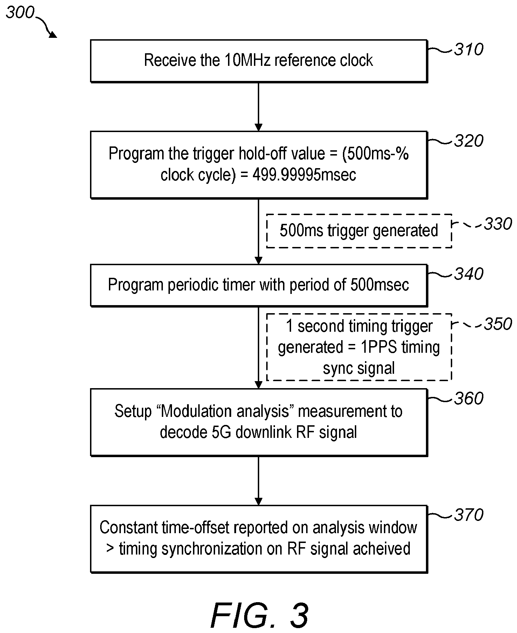

The Flowchart of FIG. 3 explains a method 300 of the embodiment in accordance to the first aspect of the invention by which time synchronization is achieved from a high frequency 10Mhz clock from the Radio Unit.

The method starts with receiving the 10Mhz frequency clock by the Analyzer 310 at the trigger input connector referring back to 202 of FIG. 2.

Then the Analyzer Trigger HOLD function is programmed to periodically trigger every 500 msec by programming the Analyzer Hold-off value to 500 milliseconds MINUS ½ clock-cycle equals to 499.99995 msec. The ½ clock-cycle resolution of 10Mhz is required so that a time-trigger with periodicity at 500 millisecond 330 will be generated.

Then the 500 msec derived trigger pulse is input to the Periodic Timer Module which is programmed for a period of further 500 msec 340.

Then the Analyzer module generates a 1 Pulse Per Second (PPS) timing synchronization trigger 350 as a consequence.

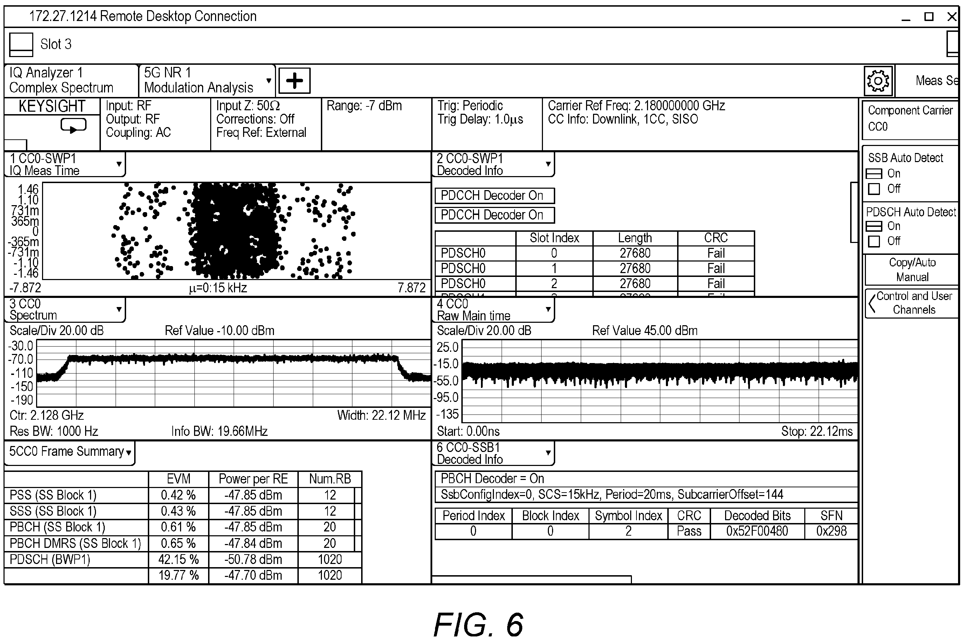

With this 1 PPS trigger the demodulated downlink RF signal will be at a fixed timing value always while decoding the signal. This resulted in decoding of a noise-free clean constellation of 4 dots for Quadrature-Phase-Shift-keying (QPSK) for PBCH (Physical Broadcast Channel as well as Binary Phase-Shift Keying (BPSK) for Primary/Secondary Synchronization channel (PSS/SSS) as indicated by the sharp green dots and blue dots respectively in the Window 1 of FIG. 6. The noise-free nature of the signals is reflected in their respective Error-Vector Magnitude (EVM) being < 0.37% in the Window 4 of FIG. 6.

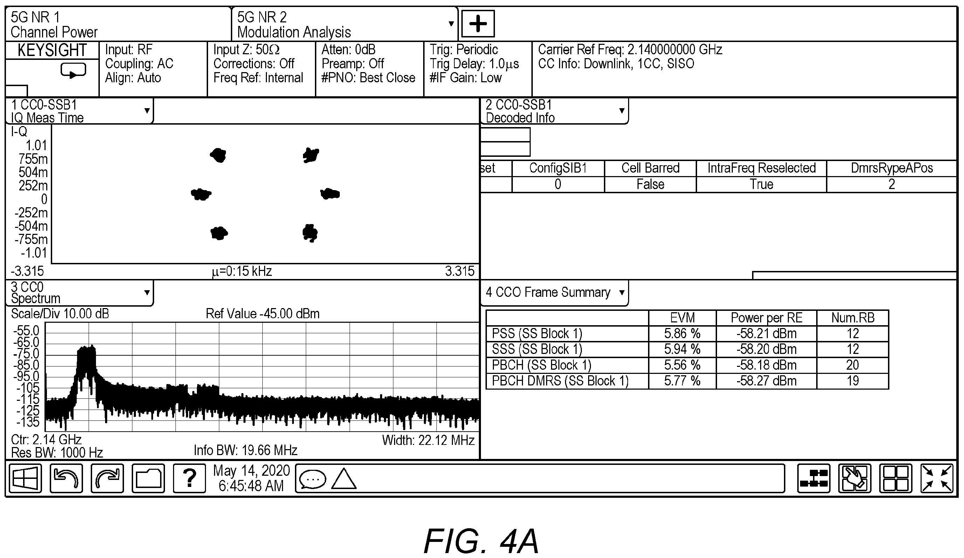

In the state-of-the art, without the first aspect of this invention, the constellation is quite noisy for the same channels as seen in FIG. 4A. Also, these signals have a relatively poor EVM of 5.5% as seen in Window 4 of FIG. 4A.

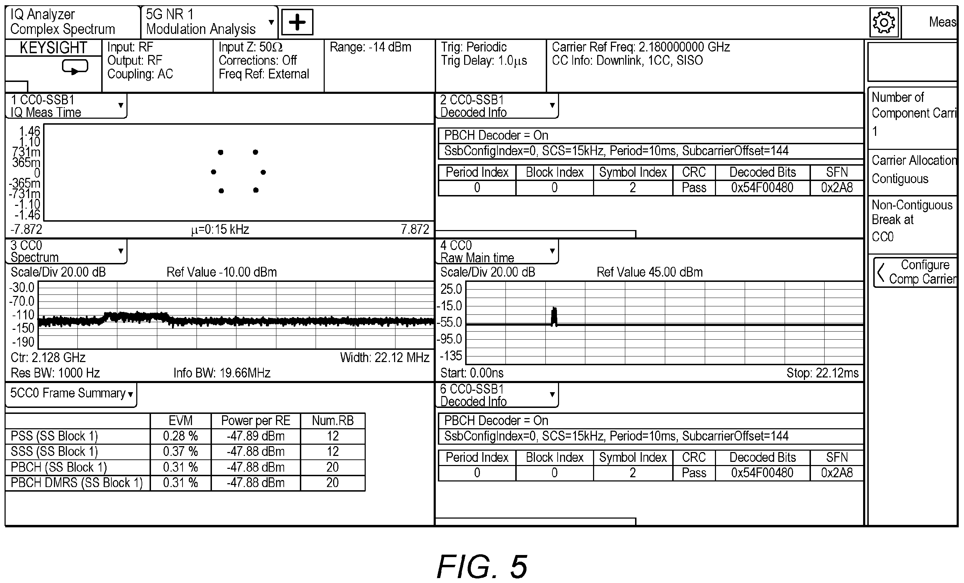

A second aspect of the invention is described in the method 400 of FIG. 5. This is described with the embodiment using M9410A modular Analyzer that has in it a new functionality called Internal Timer.

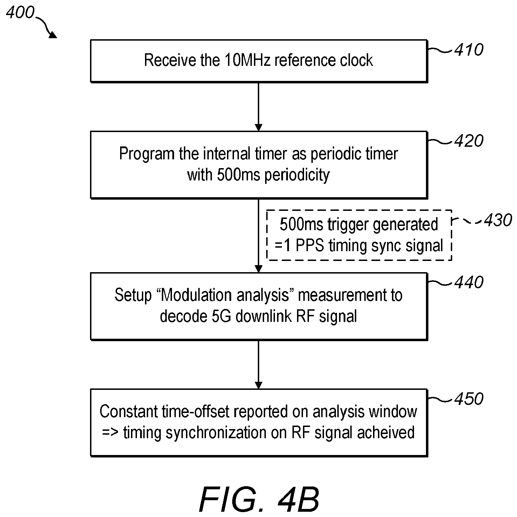

The Flowchart of FIG. 4B explains a method 400 of the embodiment in accordance to the second aspect of the invention by which time-synchronization trigger is achieved using an Internal Timer synchronized to the high-frequency external 10Mhz clock from the Radio Unit.

The method starts with receiving the 10Mhz frequency external clock by the Analyzer 410 at the external clock input connector referring back to 201 of FIG. 2

Then the Internal Periodic Timer inside the Analyzer is programmed to derive a Periodic Trigger 420 at 500msec periodicity.

Then the Analyzer module generates an equivalent of 2 Pulse Per Second (PPS) timing synchronization trigger 430 as a consequence.

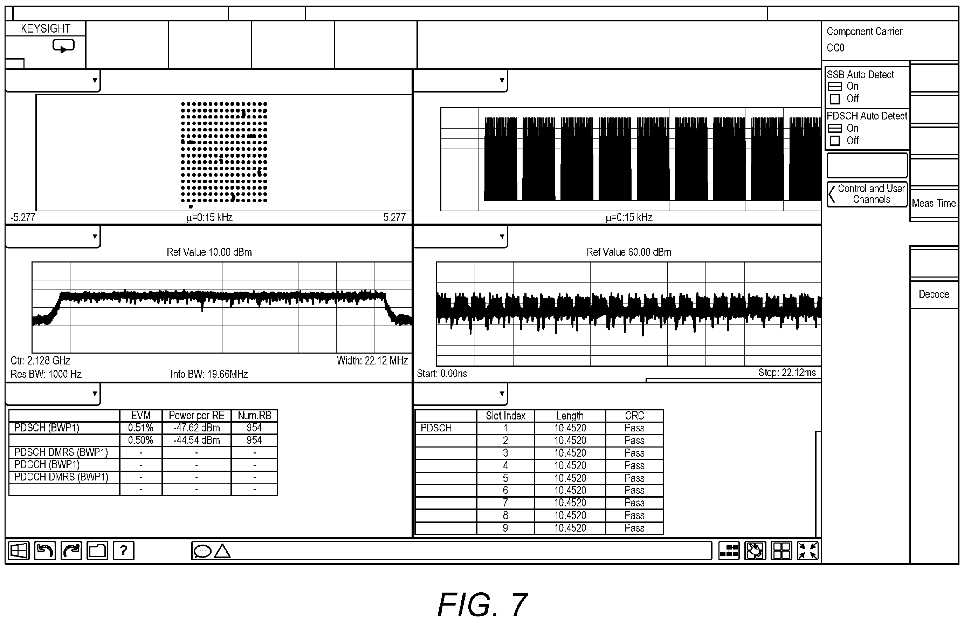

With this 2 PPS trigger the demodulated downlink RF signal is at a fixed timing value always while decoding the signal. As a result, a noise-free clean constellation of 256-QAM orange dots for Quadrature-Amplitude- Keying (256-QAM) for PDSCH (Physical Data Shared Channel) in FIG. 7. The noise-free nature of the signals is reflected in their respective Error-Vector Magnitude (EVM) being < 0.37% in the Window 4 of FIG. 7.

In the state-of-the-art, without this second aspect of the invention, the constellation is quite noisy for the same channels as seen in the clouded constellation of window 1 of FIG. 7. Also, these signals have a relatively poor EVM of 42% as seen in Window 4 of FIG. 7.

A third aspect of the invention is that this method of using 10Mhz external clock to derive the Pulse Per Second (PPS) trigger enables this synchronization method and measurement method to be used universally on all vendor measuring instruments.

A fourth aspect of the invention is that using the 10Mhz external clock to derive the Pulse Per Second (PPS) trigger enables user with redundancy against failure if the external 1PPS trigger line available in a RU system goes faulty.

While the foregoing describes various embodiments of the invention, other and further embodiments of the invention may be devised without departing from the basic scope thereof. The scope of the invention is determined by the claims that follow. The invention is not limited to the described embodiments, versions or examples, which are included to enable a person having ordinary skill in the art to make and use the invention when combined with information and knowledge available to the person having ordinary skill in the art.

### ADVANTAGES OF THE PRESENT DISCLOSURE

The present disclosure provides for a system and a method that enables working as a differentiator.

The present disclosure provides for a system/solution for deeper level field diagnostics at bit-rate/ baseband level of the received RF signal from a specific RUs in a distributed wireless deployment system where there are no local timing trigger sources locally accessible at the RUs in the building.

The present disclosure provides for a system that helps to sniff out the faulty front-haul line connection between a digital unit and the specific RU in a distributed wireless network(faulty => (a) when traffic on the connection uses greater than 90% of switch line rate specification - normally commercial switches could begin to drop packets, (b) physical optical cable fractures or (c) logical channels mapping issue between DU and specific RU IDs etc.) between any specific RP and the DU.

The present disclosure provides a system to transmit test signals from frequency-synchronized and time-synchronized Signal Generators in order to sniff out the RU(s) and/or links between RP(s) and the DU systems that are misbehaving.

The present disclosure provides a system and method for deriving a timing synchronization signal for e.g., a 10Mhz external frequency output provided by the RU and thereby time-synchronizing the measuring equipment to the RF signal transmitted by the RU, thus opening up a spectrum of various possibilities to use the equipment to monitor and diagnosis of an indoor-cellular system in deployment.

### The following numbered paragraphs are disclosed:

1. A wireless distributed communication network system, said system comprising:
   one or more radio units coupled to at least one Data unit associated with one or more user equipment (UE), wherein the one or more UEs are under a coverage area of the one or more radio units;
   a reference clock with a predefined frequency, said reference clock periodically triggers a measuring unit every predefined derived interval of time, wherein the measuring unit is coupled to the Radio unit, said measuring unit is further coupled to one or more processors coupled with a memory, wherein said memory stores instructions which when executed by the one or more processors causes said system to:
      receive a timing synchronization analog clock comprising a electrically compatible clock derived from the Radio Unit;
      receive a set of data packets from the Radio Unit, wherein the set of data packets comprise data channels, control channels and signals;
      decode the timing synchronization clock and derive synchronised frame timing with an internal clock of the measuring unit;
      lock into a wireless radio frequency wireless signal transmitted and received from the Radio Unit based on the decoded frame timing synchronization; and
      decode the set of data packets to diagnose and troubleshoot one or more system level issues during cellular network deployment and maintenance.
2. The system as disclosed in paragraph 1, wherein the troubleshoot system level issues comprise any or a combination of higher-order IQ constellation, decoding the received set of data packets in terms of Cyclic-Redundancy-Check (CRC)pass or failure, performing deeper modulation analysis to check one or more quality aspects of the received set of data packets.
3. The system as disclosed in paragraph 1, wherein the predefined frequency output of the reference clock is used to obtain any or a combination of frequency-synchronization and derive time-synchronization to trigger the measuring unit.
4. The system as disclosed in paragraph 1, wherein the troubleshoot of the one or more system issues, comprise troubleshooting of any or a combination of one or more UEs under a first RU getting attached to a second RU due to the first RU not receiving the set of data packets for the UE in a highly loaded network or any optical physical cable damage/ logical mapping issue in a connection between a centralized digital unit and that radio unit.
5. The system as disclosed in paragraph 1, wherein an Analyzer module coupled to the reference clock generates a predefined Pulse Per Second (PPS) timing synchronization trigger, wherein the predefined PPS is at a fixed timing value while decoding the received set of data packets.
6. The system as disclosed in paragraph 1, wherein the time-synchronization trigger is achieved using an Internal Timer synchronized to the high-frequency reference clock from the Radio Unit.
7. The system as disclosed in paragraph 1, wherein the time-sychronization trigger is achieve using a Periodic Timer synchronized to the high-frequency reference clock from the Radio Unit.
8. The system as disclosed in paragraph 1, wherein the reference clock is configured to derive the predefined Pulse Per Second (PPS) time-synchronization trigger that enables the system to be used universally on all measuring instruments.
9. The system as disclosed in paragraph 1, wherein the reference clock is configured to derive the predefined Pulse Per Second (PPS) trigger that enables a user with redundancy against failure if the external predefined PPS trigger line, if available, in the system goes faulty.
10. A method for time synchronization in a wireless distributed communication network, said method comprising:
   receiving a reference timing synchronization analog clock comprising an electrically compatibility clock derived from the Radio unit, wherein a reference clock with a predefined frequency is programmed to periodically trigger a measuring unit coupled to the radio unit every predefined interval of time;
   receiving a set of data packets from the UE, wherein the set of data packets comprise data channels, control channels and signals;
   decoding the timing synchronization clock and synchronize frame timing with an internal clock of the measuring unit;
   locking into a wireless radio frequency wireless signal transmitted and received from the Radio Unit based on the decoded frame timing synchronization; and
   decoding the set of data packets to diagnose and troubleshoot one or more method level issues during cellular network deployment and maintenance.
11. The method as disclosed in paragraph 10, wherein the method further comprises:
   troubleshooting of system level issues comprise any or a combination of higher-order IQ constellation, decoding the received set of data packets in terms of Cyclic-Redundancy-Check (CRC)pass or failure, performing deeper modulation analysis to check one or more quality aspects of the received set of data packets.
12. The method as disclosed in paragraph 10, wherein the method further comprises
   obtaining any or a combination of frequency-synchronization and derive time-synchronization to trigger the measuring unit from the predefined frequency output of the reference clock.
13. The method as disclosed in paragraph 10, wherein the method comprises
   troubleshooting of any or a combination of one or more UEs under a first RU getting attached to a second RU due to the first RU not receiving the set of data packets for the UE in a highly loaded network or any optical physical cable damage/logical mapping issue in a connection between a centralized digital unit and that radio unit.
14. The method as disclosed in paragraph 10, wherein the method comprises
   generating by an Analyzer module coupled to the reference clock, a predefined Pulse Per Second (PPS) timing synchronization trigger, wherein the predefined PPS is at a fixed timing value while decoding the received set of data packets.
15. The method as disclosed in paragraph 10, wherein the time-synchronization trigger is achieved using an Internal Timer synchronized to the high-frequency reference clock from the Radio Unit.
16. The method as disclosed in paragraph 10, wherein the time-sychronization trigger is achieve using a Periodic Timer synchronized to the high-frequency reference clock from the Radio Unit.
17. The method as disclosed in paragraph 10, wherein method further
   configuring the reference clock to derive the predefined Pulse Per Second (PPS) trigger that enables the method to be used universally on all measuring instruments.
18. The method as disclosed in paragraph 10, wherein the method further comprises
   configuring the reference clock to derive the predefined Pulse Per Second (PPS) trigger that enables a user with redundancy against failure if the external predefined PPS trigger line available in the method goes faulty.

## Claims

1. A wireless distributed communication network system, said system comprising:
one or more radio units coupled to at least one Data unit associated with one or more user equipment (UE), wherein the one or more UEs are under a coverage area of the one or more radio units;
a reference clock with a predefined frequency, said reference clock periodically triggers a measuring unit every predefined derived interval of time, wherein the measuring unit is coupled to the Radio unit, said measuring unit is further coupled to one or more processors coupled with a memory, wherein said memory stores instructions which when executed by the one or more processors causes said system to:
receive a timing synchronization analog clock comprising a electrically compatible clock derived from the Radio Unit;
receive a set of data packets from the Radio Unit, wherein the set of data packets comprise data channels, control channels and signals;
decode the timing synchronization clock and derive synchronised frame timing with an internal clock of the measuring unit;
lock into a wireless radio frequency wireless signal transmitted and received from the Radio Unit based on the decoded frame timing synchronization; and
decode the set of data packets to diagnose and troubleshoot one or more system level issues during cellular network deployment and maintenance.

2. The system as claimed in claim 1, wherein the troubleshoot system level issues comprise any or a combination of higher-order IQ constellation, decoding the received set of data packets in terms of Cyclic-Redundancy-Check (CRC)pass or failure, performing deeper modulation analysis to check one or more quality aspects of the received set of data packets.

3. The system as claimed in claim 1, wherein the predefined frequency output of the reference clock is used to obtain any or a combination of frequency-synchronization and derive time-synchronization to trigger the measuring unit.

4. The system as claimed in claim 1, wherein the troubleshoot of the one or more system issues, comprise troubleshooting of any or a combination of one or more UEs under a first RU getting attached to a second RU due to the first RU not receiving the set of data packets for the UE in a highly loaded network or any optical physical cable damage/logical mapping issue in a connection between a centralized digital unit and that radio unit.

5. The system as claimed in claim 1, wherein an Analyzer module coupled to the reference clock generates a predefined Pulse Per Second (PPS) timing synchronization trigger, wherein the predefined PPS is at a fixed timing value while decoding the received set of data packets.

6. The system as claimed in claim 1, wherein the time-synchronization trigger is achieved using an Internal Timer synchronized to the high-frequency reference clock from the Radio Unit.

7. The system as claimed in claim 1, wherein the time-sychronization trigger is achieve using a Periodic Timer synchronized to the high-frequency reference clock from the Radio Unit.

8. The system as claimed in claim 1, wherein the reference clock is configured to derive the predefined Pulse Per Second (PPS) time-synchronization trigger that enables the system to be used universally on all measuring instruments.

9. The system as claimed in claim 1, wherein the reference clock is configured to derive the predefined Pulse Per Second (PPS) trigger that enables a user with redundancy against failure if the external predefined PPS trigger line, if available, in the system goes faulty.

10. A method for time synchronization in a wireless distributed communication network, said method comprising:
receiving a reference timing synchronization analog clock comprising an electrically compatibility clock derived from the Radio unit, wherein a reference clock with a predefined frequency is programmed to periodically trigger a measuring unit coupled to the radio unit every predefined interval of time;
receiving a set of data packets from the UE, wherein the set of data packets comprise data channels, control channels and signals;
decoding the timing synchronization clock and synchronize frame timing with an internal clock of the measuring unit;
locking into a wireless radio frequency wireless signal transmitted and received from the Radio Unit based on the decoded frame timing synchronization; and
decoding the set of data packets to diagnose and troubleshoot one or more method level issues during cellular network deployment and maintenance.

11. The method as claimed in claim 10, wherein the method further comprises:
troubleshooting of system level issues comprise any or a combination of higher-order IQ constellation, decoding the received set of data packets in terms of Cyclic-Redundancy-Check (CRC)pass or failure, performing deeper modulation analysis to check one or more quality aspects of the received set of data packets.

12. The method as claimed in claim 10, wherein the method further comprises
obtaining any or a combination of frequency-synchronization and derive time-synchronization to trigger the measuring unit from the predefined frequency output of the reference clock.

13. The method as claimed in claim 10, wherein the method comprises
troubleshooting of any or a combination of one or more UEs under a first RU getting attached to a second RU due to the first RU not receiving the set of data packets for the UE in a highly loaded network or any optical physical cable damage/logical mapping issue in a connection between a centralized digital unit and that radio unit.

14. The method as claimed in claim 10, wherein the method comprises
generating by an Analyzer module coupled to the reference clock, a predefined Pulse Per Second (PPS) timing synchronization trigger, wherein the predefined PPS is at a fixed timing value while decoding the received set of data packets.

15. The method as claimed in claim 10, wherein the time-synchronization trigger is achieved using an Internal Timer synchronized to the high-frequency reference clock from the Radio Unit.
